(19) **Europäisches Patentamt / European Patent Office / Office européen des brevets**

(11) **EP 1 125 394 B1**

(12) **FASCICULE DE BREVET EUROPEEN**

(45) Date de publication et mention
de la délivrance du brevet:
**03.01.2007 Bulletin 2007/01**

(21) Numéro de dépôt: **99950890.6**

(22) Date de dépôt: **29.10.1999**

(51) Int Cl.:
***H04L 9/06*** (2006.01)

(86) Numéro de dépôt international:
**PCT/FR1999/002660**

(87) Numéro de publication internationale:
**WO 2000/027068 (11.05.2000 Gazette 2000/19)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

GEGENMASSNAHMENVORRICHTUNG IN EINEM ELKTRONISCHEN BAUTEIL UM EINEN KRYPTO-ALGORITHMUS MIT GEHEIMSCHLÜSSEL DURCHZUFÜHREN

COUNTERMEASURE METHOD IN AN ELECTRONIC COMPONENT USING A SECRET KEY CRYPTOGRAPHIC ALGORITHM

(84) Etats contractants désignés:
**DE ES FR GB IT**

(30) Priorité: **29.10.1998 FR 9813605**

(43) Date de publication de la demande:
**22.08.2001 Bulletin 2001/34**

(73) Titulaires:
• **GEMPLUS**
**13881 Gémenos Cedex (FR)**
• **Clavier, Christophe**
**13420 Gémenos (FR)**
• **Coron, Jean-Sébastien**
**75015 Paris (FR)**

(72) Inventeurs:
• **CLAVIER, Christophe**
**F-13420 Gémenos (FR)**
• **CORON, Jean-Sébastien**
**F-75015 Paris (FR)**

(56) Documents cités:
**FR-A- 2 672 402**

• **MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 juillet 1994 (1994-07-01), pages 85-90, XP000460342**
• **YI X ET AL: "A METHOD FOR OBTAINING CRYPTOGRAPHICALLY STRONG 8X8 S-BOXES" IEEE GLOBAL TELECOMMUNICATIONS CONFERENCE, PHOENIX, ARIZONA, NOV. 3 - 8, 1997, vol. 2, 3 novembre 1997 (1997-11-03), pages 689-693, XP000737626 INSTITUTE OF ELECTRICAL AND ELECTRONICS ENGINEERS**

**Description**

La présente invention concerne un procédé de contre-mesure dans un composant électronique mettant en oeuvre un algorithme de cryptographie à clé secrète. Ils sont utilisés dans des applications où l'accès à des services ou à des données est sévèrement contrôlé. Ils ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applicationsde télépéage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour Data *Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire...) et de la clé secrète contenue dans la carte, et de fournir en retour au système hôte ce message chiffré, ce qui permet par exemple au système hôte d'authentifier le composant ou la carte, d'échanger des données...

Or il est apparu que ces composants ou ces cartes sont vulnérables à des attaques consistant en une analyse différentielle de consommation en courant et qui permettent à des tiers mal intentionnés de trouver la clé secrète. Ces attaques sont appelées attaques DPA, acronyme anglo-saxon pour *Differential Power Analysis.*

Le principe de ces attaques DPA repose sur le fait que la consommation en courant du microprocesseur exécutant des instructions varie selon la donnée manipulée.

Notamment, une instruction du microprocesseur manipulant un bit de donnée génère deux profils de courant différents selon que ce bit vaut "1" ou "0". Typiquement, si l'instruction manipule un "0", on a à cet instant d'exécution une première amplitude du courant consommé et si l'instruction manipule un "1", on a une deuxième amplitude du courant consommé, différente de la première.

Les caractéristiques des algorithmes de cryptographie sont connues : calculs effectués, paramètres utilisés. La seule inconnue est la clé secrète contenue en mémoire programme. Celle-ci ne peut être déduite de la seule connaissance du message appliqué en entrée et du message chiffré fourni en retour.

Cependant, dans un algorithme de cryptographie, certaines données calculées dépendent seulement du message appliqué en clair en entrée de la carte et de la clé secrète contenue dans la carte. D'autres données calculées dans l'algorithme peuvent aussi être recalculées seulement à partir du message chiffré (généralement fourni en clair en sortie de la carte vers le système hôte) et de la clé secrète contenue dans la carte. Plus précisément, chaque bit de ces données particulières peut être déterminé à partir du message d'entrée ou de sortie, et d'un nombre limité de bits particuliers de la clé.

Ainsi, à chaque bit d'une donnée particulière, correspond une sous-clé formée par un groupe particulier de bits de la clé.

Les bits de ces données particulières qui peuvent être prédites sont appelés dans la suite, bits cibles.

L'idée de base de l'attaque DPA est ainsi d'utiliser la différence du profil de consommation en courant d'une instruction selon qu'elle manipule un "1" ou un "0" et la possibilité de calculer un bit cible par les instructions de l'algorithme à partir d'un message connu d'entrée ou de sortie et d'une hypothèse sur la sous-clé correspondante.

Le principe de l'attaque DPA est donc de tester une hypothèse de sous-clé donnée, en appliquant sur un grand nombre de courbes de mesure en courant, chacune relative à un message d'entrée connu de l'attaquant, une fonction booléenne de sélection, fonction de l'hypothèse de sous-clé, et définie pour chaque courbe par la valeur prédite pour un bit cible.

En faisant une hypothèse sur la sous-clé concernée, on est en effet capable de prédire la valeur "0" ou "1" que va prendre ce bit cible pour un message d'entrée ou de sortie donné.

On peut alors appliquer comme fonction booléenne de sélection, la valeur prédite "0" ou "1" par le bit cible pour l'hypothèse de sous-clé considérée, pour trier ces courbes en deux paquets : un premier paquet regroupe les courbes qui ont vu la manipulation du bit cible à "0" et un deuxième paquet regroupe les courbes qui ont vu la manipulation du bit cible à "1" selon l'hypothèse de sous-clé. En faisant la moyenne de consommation en courant dans chaque paquet, on obtient une courbe de consommation moyenne $M0(t)$ pour le premier paquet et une courbe de consommation moyenne $M1(t)$ pour le deuxième paquet.

Si l'hypothèse de sous-clé est juste, le premier paquet regroupe réellement toutes les courbes parmi les N courbes qui ont vu la manipulation du bit cible à "0" et le deuxième paquet regroupe réellement toutes les courbes parmi les N courbes qui ont vu la manipulation du bit cible à "1". La courbe moyenne de consommation $M0(t)$ du premier paquet aura alors une consommation moyenne partout sauf aux moments de l'exécution des instructions critiques, avec un profil de consommation en courant caractéristique de la manipulation du bit cible à "0" ($profil_0$). En d'autres termes, pour toutes ces courbes tous les bits manipulés ont eu autant de chances de valoir "0" que de valoir "1", sauf le bit cible qui a toujours eu la valeur "0". Ce qui peut s'écrire :

$$MO(t) = [(profil_0 + profil_1)/2]_{t \neq tci} + [profil_0]_{tci}$$

soit

$$MO(t) = [Vm_t]_{t \neq tci} + [profil_0]_{tci}$$

où tci représente les instants critiques, auxquels une instruction critique a été exécutée.

De même, la courbe moyenne de consommation M1(t) du deuxième paquet correspond à une consommation moyenne partout sauf aux moments de l'exécution des instructions critiques, avec un profil de consommation en courant caractéristique de la manipulation du bit cible à "1" ($profil_1$). On peut écrire :

$$M1(t) = [(profil_0 + profil_1)/2]_{t \neq tci} + [profil_1]_{tci}$$

soit

$$M1(t) = [Vm_t]_{t \neq tci} + [profil_1]_{tci}$$

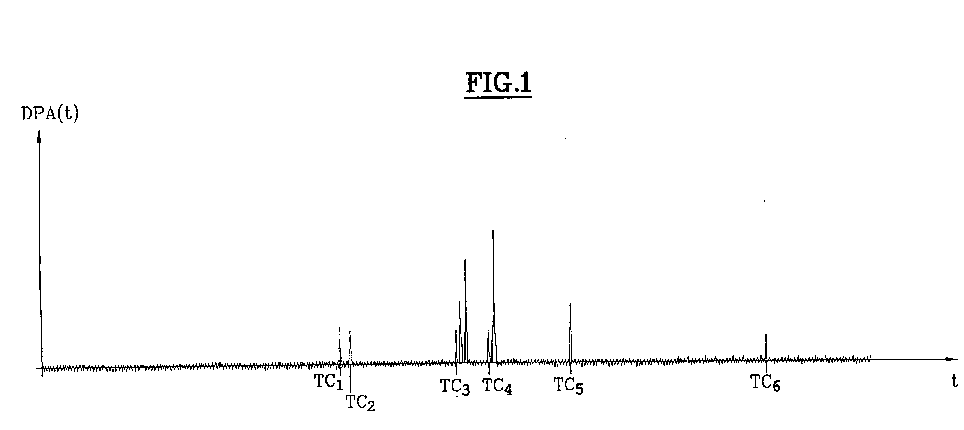

On a vu que les deux profils $profil_0$ et $profil_1$ ne sont pas égaux. La différence des courbes M0(t) et M1(t) donne alors un signal DPA(t) dont l'amplitude est égale à $profil_0 - profil_1$ aux instants critiques tci d'exécution des instructions critiques manipulant ce bit, c'est à dire, dans l'exemple représenté sur la figure 1, aux endroits tc0 à tc6 et dont l'amplitude est à peu près égale à zéro en dehors des instants critiques.

Si l'hypothèse de sous-clé est fausse, le tri ne correspond pas à la réalité. Statistiquement, il y a alors dans chaque paquet, autant de courbes ayant vu réellement la manipulation du bit cible à "0" que de courbes ayant vu la manipulation du bit cible à "1". La courbe moyenne résultante M0(t) se situe alors autour d'une valeur moyenne donnée par $(profil_0 + profil_1)/2 = Vm$, car pour chacune des courbes, tous les bits manipulés, y compris le bit cible ont autant de chances de valoir "0" que de valoir "1".

Le même raisonnement sur le deuxième paquet conduit à une courbe moyenne de consommation en courant M1(t) dont l'amplitude se situe autour d'une valeur moyenne donnée par $(profil_0 + profil_1)/2 = Vm$.

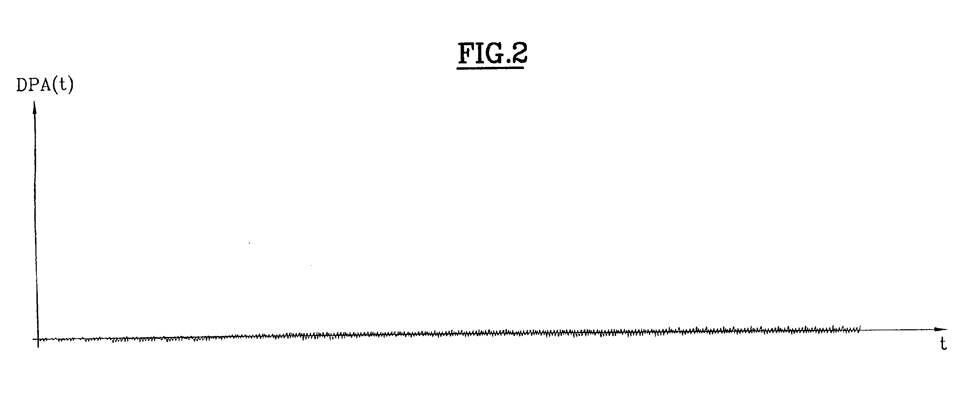

Le signal DPA(t) fourni par la différence M0(t)-M1(t) est dans ce cas sensiblement égal à zéro. Le signal DPA(t) dans le cas d'une hypothèse de sous-clé fausse est représenté sur la figure 2.

Ainsi l'attaque DPA exploite la différence du profil de consommation en courant pendant l'exécution d'une instruction suivant la valeur du bit manipulé, pour effectuer un tri de courbes de consommation en courant selon une fonction de sélection booléenne pour une hypothèse de sous-clé donnée. En effectuant une analyse différentielle de la consommation moyenne en courant entre les deux paquets de courbes obtenus, on obtient un signal d'information DPA(t).

Le déroulement d'une attaque DPA consiste alors globalement:

a- à tirer N messages aléatoires (par exemple N égal 1000);
b- à faire exécuter l'algorithme par la carte pour chacun des N messages aléatoires, en relevant la courbe de consommation en courant à chaque fois (mesurée sur la borne d'alimentation du composant);
c- à faire une hypothèse sur une sous-clé;
d- à prédire, pour chacun des messages aléatoires, la valeur prise par un des bits cibles dont la valeur ne dépend que des bits du message (d'entrée ou de sortie) et de la sous-clé prise en hypothèse, pour obtenir la fonction de sélection booléenne;
e- à trier les courbes selon cette fonction de sélection booléenne (c'est à dire selon la valeur "0" ou "1" prédite pour ce bit cible pour chaque courbe sous l'hypothèse de sous-clé);
f- à calculer dans chaque paquet la courbe résultante de consommation moyenne en courant;
g- à effectuer la différence de ces courbes moyennes, pour obtenir le signal DPA(t).

Si l'hypothèse sur la sous-clé est juste, la fonction de sélection booléenne est juste et les courbes du premier paquet correspondent réellement aux courbes pour lesquelles le message appliqué en entrée ou en sortie a donné un bit cible à "0" dans la carte et les courbes du deuxième paquet correspondent réellement aux courbes pour lesquelles le message appliqué en entrée ou en sortie a donné un bit cible à "1" dans la carte.

On est dans le cas de la figure 1 : le signal DPA(t) n'est donc pas nul aux instants tc0 à tc6 correspondant à l'exécution des instructions critiques (celles qui manipulent le bit cible).

On notera que l'attaquant n'a pas besoin de connaître avec précision les instants critiques. Il suffit qu'il y ait au moins un instant critique dans la période d'acquisition.

Si l'hypothèse de sous-clé n'est pas juste, le tri ne correspond pas à la réalité et on a alors dans chaque paquet autant de courbes correspondant en réalité à un bit cible à "0" que de courbes correspondant à un bit cible à "1". Le signal DPA(t) est sensiblement nul partout (cas représenté à la figure 2). Il faut retourner à l'étape c- et faire une nouvelle hypothèse sur la sous-clé.

Si l'hypothèse s'avère juste, on peut passer à l'évaluation d'autres sous-clés, jusqu'à avoir reconstitué la clé au maximum. Par exemple, avec un algorithme DES, on utilise une clé de 64 bits, dont seulement 56 bits utiles. Avec une attaque DPA, on est capable de reconstituer au moins 48 bits des 56 bits utiles. L'article de Miyaguchi, "Secret key ciphers that change the encipherment algorithm under the control of the key", publié le 4 Julliet 1999, décrit un algorithme à clé secrète du type DES modifié pour supporter un attaque différentiel.

La présente invention a pour but de mettre en oeuvre dans un composant électronique, un procédé de contre-mesure qui entraîne un signal DPA(t) nul, même dans le cas où l'hypothèse de sous-clé est juste.

De cette façon, rien ne permet de distinguer le cas de l'hypothèse de sous-clé juste des cas d'hypothèses de sous-clé fausses. Par cette contre-mesure, le composant électronique est paré contre les attaques DPA.

Mais dans l'invention, on s'est rendu compte qu'il ne suffisait pas de faire en sorte que le signal DPA(t) soit nul relativement à un bit cible donné.

En effet, si on considère la valeur prise par plusieurs bits cibles d'une même donnée manipulée par les instructions critiques, on va devoir trier les courbes non plus en deux paquets, mais en plusieurs paquets. On n'a plus une fonction de sélection binaire. On peut montrer qu'en regroupant ensuite ces paquets d'une manière ou d'une autre, on peut obtenir un signal DPA(t) non nul dans le cas d'une hypothèse de sous-clé juste, alors qu'il aurait été nul si l'on aviat trié selon une fonction de sélection binaire sur un seul bit cible.

Prenons par exemple deux bits cibles d'une même donnée. Ces deux bits cibles peuvent prendre les $2^2$ valeurs suivantes : "00", "01", "10" et "11".

En appliquant la fonction de sélection aux N=1000 courbes de consommation en courant mesurées, on obtient quatre paquets de courbes. Si le tri est juste, un premier paquet de 250 courbes environ correspond à la valeur "00", un deuxième paquet de 250 courbes environ correspond à la valeur "01", un troisième paquet de 250 courbes environ correspond à la valeur "10" et un quatrième paquet de 250 courbes environ correspond à la valeur "11".

Si on regroupe les premier et quatrième paquets dans un premier groupe et les deuxième et troisième paquets dans un deuxième groupe, on obtient deux groupes qui ne sont pas équivalents.

Dans le premier groupe, les deux bits ont autant de chances de valoir "00" que de valoir "11". La valeur moyenne aux instants critiques de toutes les courbes de consommation de ce groupe peut s'écrire :

$$\texttt{M1 (t}_\texttt{ci}\texttt{)=[consommation("00") + consommation ("11")]/2}$$

Dans le deuxième groupe, les deux bits ont autant de chances de valoir "01" que de valoir "10". La valeur moyenne aux instants critiques de toutes les courbes de consommation de ce groupe peut s'écrire :

$$\texttt{M2 (t}_\texttt{ci}\texttt{)=[consommation("01") + consommation ("10")]/2}$$

Si on fait la différence entre ces deux moyennes, on obtient un signal DPA(t) non nul. En d'autres termes, les deux groupes dont on compare les consommations moyennes n'ont pas un contenu équivalent.

Dans l'invention, on a donc cherché à empêcher l'obtention d'un quelconque signal significatif au sens de l'attaque DPA. Quel que soit le nombre de bits cibles pris, quelle que soit la combinaison de paquets effectuée pour faire la comparaison des consommations moyennes, le signal DPA (t) sera toujours nul. Il faut donc obtenir des paquets équivalents, quel que soit le nombre de bits cibles considérés.

Une solution à ces différents problèmes techniques a été trouvée dans l'utilisation d'une valeur aléatoire dans une opération de OU EXCLUSIF avec l'une et/ou l'autre des données d'entrée et de sortie de moyens utilisés dans l'algorithme.

Avec une utilisation selon l'invention d'une telle valeur aléatoire, les données manipulées par les instructions critiques deviennent imprédictibles tout en ayant un résultat juste en sortie de l'algorithme.

Telle que caractérisée, l'invention concerne donc un procédé de contre-mesure dans un composant électronique mettant en oeuvre un algorithme cryptographique à clé secrète, la mise en oeuvre de l'algorithme comprenant l'utilisation de premiers moyens pour fournir une donnée de sortie à partir d'une donnée d'entrée, la donnée de sortie et/ou des données dérivées étant manipulées par des instructions critiques. Selon l'invention, le procédé de contre-mesure prévoit l'utilisation d'autres moyens, en sorte que la donnée de sortie et les données dérivées soient imprédictibles, ces autres moyens étant obtenus des dits premier moyens par une opération de OU EXCLUSIF avec une valeur aléatoire ou une valeur aléatoire dérivée sur l'une et/ou sur l'autre des données d'entrée et de sortie des dits premiers moyens.

D'autres caractéristiques et avantages de l'invention sont détaillés dans la description suivante faite à titre indicatif et nullement limitatif et en référence aux dessins annexés, dans lesquels :

- les figures 1 et 2 déjà décrites représentent le signal DPA(t) que l'on peut obtenir en fonction d'une hypothèse sur une sous-clé de la clé secrète K, selon une attaque DPA;
- les figures 3 et 4 sont des organigrammes détaillés des premiers et derniers tours de l'algorithme DES;
- la figure 5 est un schéma-bloc de l'opération SBOX utilisée dans l'algorithme DES;
- la figure 6 montre un exemple de table de constantes élémentaire à une entrée et une sortie utilisée dans l'opération SBOX;
- la figure 7 représente un premier exemple d'organigramme d'exécution du DES avec un procédé de contre-mesure selon l'invention;
- la figure 8 est un organigramme des premiers tours du DES correspondant;
- les figures 9 et 10 représentent respectivement un organigramme d'exécution du DES et un organigramme détaillé des premiers tours, dans un deuxième mode d'application du procédé de contre mesure selon l'invention;
- les figures 11 et 12 correspondent à un troisième mode d'application du procédé de contre mesure selon l'invention;
- la figure 13 représente un organigramme d'exécution du DES dans une variante du troisième mode d'application;
- la figure 14 représente un schéma-bloc simplifié d'une carte à puce comportant un composant électronique dans lequel le procédé de contre-mesure selon l'invention est mis en oeuvre.

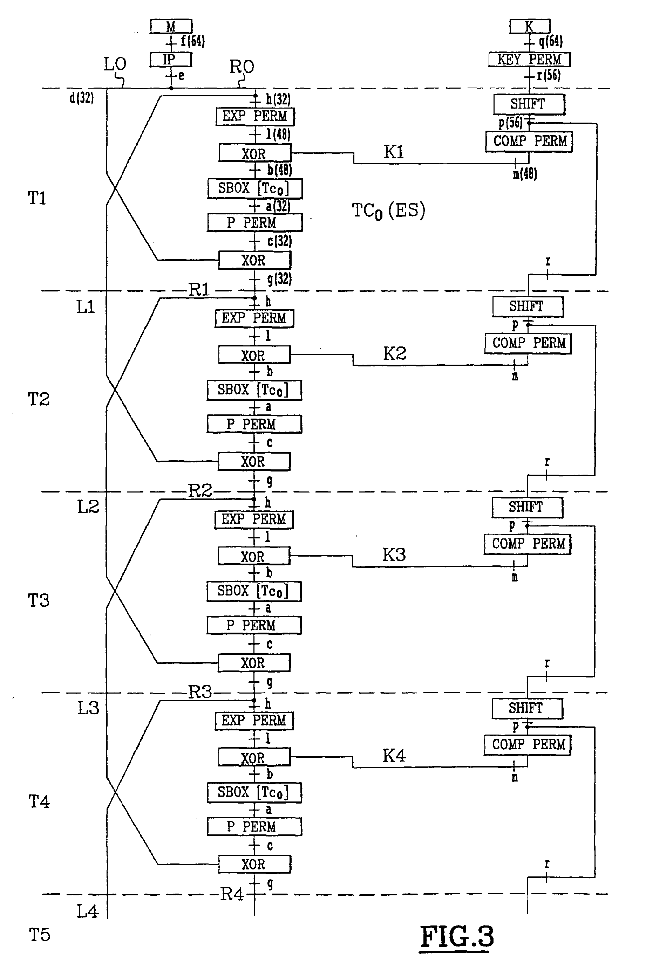

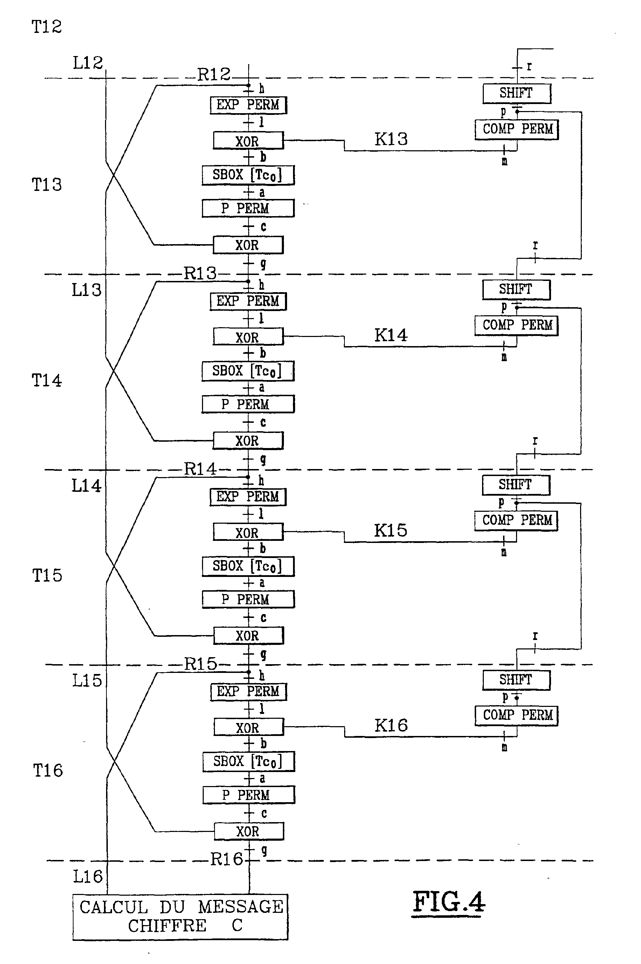

L'algorithme cryptographique à clé secrète DES (dans la suite on parlera plus simplement du DES ou de l'algorithme DES) comporte 16 tours de calcul, notés T1 à T16, comme représenté sur les figures 3 et 4.

Le DES débute par une permutation initiale IP sur le message d'entrée M (figure 3). Le message d'entrée M est un mot f de 64 bits. Après permutation, on obtient un mot e de 64 bits, que l'on coupe en deux pour former les paramètres d'entrée L0 et R0 du premier tour (T1). L0 est un mot d de 32 bits contenant les 32 bits de poids forts du mot e. R0 est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PERM sur le paramètre R0, consistant en une expansion et une permutation, pour fournir en sortie un mot 1 de 48 bits.

Ce mot 1 est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 3 et 4) suivi d'une permutation et d'une compression (opération notée COMP PERM).

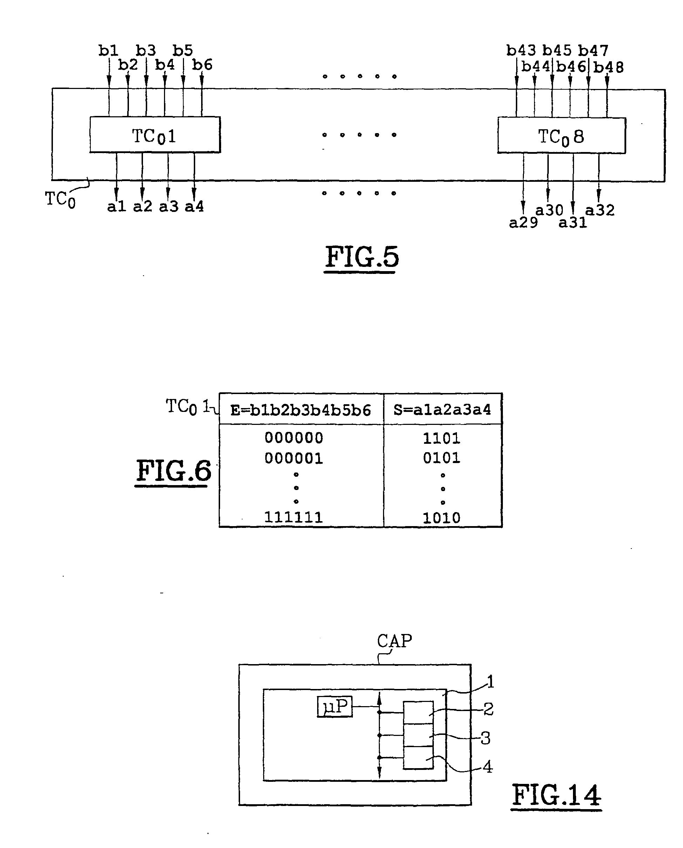

Le mot b est appliqué à une opération notée SBOX, en sortie de laquelle on obtient un mot a de 32 bits. Cette opération particulière sera expliquée plus en détail en relation avec les figures 5 et 6.

Le mot a subit une permutation P PERM, donnant en sortie le mot c de 32 bits.

Ce mot c est combiné au paramètre d'entrée L0 du premier tour T1, dans une opération logique de type OU EXCLUSIF, notée XOR, qui fournit en sortie le mot g de 32 bits.

Le mot h (=R0) du premier tour fournit le paramètre d'entrée L1 du tour suivant (T2) et le mot g du premier tour fournit le paramètre d'entrée R1 du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li et Ri et r pour le tour suivant Ti+1.

En fin d'algorithme DES (figure 4), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant;
- application de la permutation IP$^{-1}$ inverse de celle de début de DES, pour obtenir le mot f' de 64 bits formant le message chiffré C.

L'opération SBOX est détaillée sur les figures 5 et 6. Elle comprend une table de constantes $TC_0$ pour fournir une donnée de sortie a en fonction d'une donnée d'entrée b.

En pratique, cette table de constantes $TC_0$ se présente sous la forme de huit tables de constantes élémentaires $TC_0 1$ à $TC_0 8$, chacune recevant en entrée seulement 6 bits du mot b, pour fournir en sortie seulement 4 bits du mot a.

Ainsi, la table de constante élémentaire $TC_0 1$ représentée sur la figure 6 reçoit comme donnée d'entrée, les bits b1 à b6 du mot b et fournit comme donnée de sortie les bits a1 à a4 du mot a.

En pratique ces huit tables de constantes élémentaires $TC_0 1$ à $TC_0 8$ sont mémorisées en mémoire programme du composant électronique.

Dans l'opération SBOX du premier tour T1, un bit particulier de la donnée a de sortie de la table de constante $TC_0$ dépend de seulement 6 bits de la donnée b appliquée en entrée, c'est à dire de seulement 6 bits de la clé secrète K et du message d'entrée (M).

Dans l'opération SBOX du dernier tour T16, un bit particulier de la donnée a de sortie de la table de constante $TC_0$ peut être recalculé à partir de seulement 6 bits de la clé secrète K et du message chiffré (C).

Or si on reprend le principe de l'attaque DPA, si on choisit un ou des bits de la donnée de sortie a comme bits cibles, il suffit de faire une hypothèse sur 6 bits de la clé K, pour prédire la valeur du ou des bits cibles pour un message d'entrée (M) ou de sortie (C) donné. En d'autres termes, pour le DES, il suffit de faire une hypothèse sur une sous-clé de 6 bits.

Dans une attaque DPA sur un tel algorithme pour un ensemble de bits cibles donné issu d'une table de constantes élémentaire donnée, on a donc à discriminer une hypothèse de sous-clé juste parmi 64 possibles.

Ainsi, à partir des bits de sortie des huit tables de constantes élémentaires $TC_0 1$ à $TC_0 8$, on peut découvrir jusqu'à 8x6=48 bits de la clé secrète, en faisant des attaques DPA sur des bits cibles correspondants.

Dans le DES, on trouve donc des instructions critiques au sens des attaques DPA au début de l'algorithme et à la fin.

Au début de l'algorithme DES, les données qui peuvent être prédites à partir d'un message d'entrée M et d'une hypothèse de sous-clé, sont les données a et g calculées dans le premier tour (T1).

La donnée a du premier tour T1 (figure 3) est la donnée de sortie de l'opération SBOX du tour considéré. La donnée g est calculée à partir de la donnée a, par permutation (P PERM) et opération OU EXCLUSIF avec le paramètre d'entrée L0.

En fait, la donnée c du premier tour, est une donnée dérivée de la donnée a du premier tour. La donnée dérivée c correspond à une simple permutation de bits de la donnée a.

La donnée 1 du deuxième tour est une donnée dérivée de la donnée g du premier tour, car elle correspond à une permutation des bits du mot g, certains bits du mot g étant en outre dupliqués.

Connaissant a et g, on peut aussi connaître ces données dérivées.

Les instructions critiques du début de l'algorithme sont les instructions critiques qui manipulent soit la donnée que l'on peut prédire, comme la donnée a ou la donnée g du premier tour, soit une donnée dérivée.

Les instructions critiques manipulant la donnée a du premier tour T1 ou la donnée dérivée c sont ainsi les instructions de fin de l'opération SBOX, de l'opération P PERM et de début de l'opération XOR du premier tour T1.

Les instructions critiques manipulant la donnée g ou des données dérivées sont toutes les instructions de fin d'opération XOR de fin du premier tour T1 jusqu'aux instructions de début d'opération SBOX du deuxième tour T2, et les instructions de début de l'opération XOR en fin du troisième tour T3 ( L2 = h(T2) = g(T1) ).

En fin d'algorithme DES, les données qui peuvent être prédites à partir d'un message chiffré C et d'une hypothèse de sous-clé, sont la donnée a du seizième tour T16 et la donnée L15 égale au mot h du quatorzième tour T14.

Les instructions critiques manipulant la donnée a du seizième tour ou des données dérivées sont les instructions du seizième tour de fin d'opération SBOX, de l'opération de permutation P PERM et de début d'opération XOR.

Pour la donnée L15, les instructions critiques manipulant cette donnée ou des données dérivées sont toutes les instructions depuis les instructions de fin d'opération XOR en fin du quatorzième tour T14, jusqu'aux instructions de début d'opération SBOX du quinzième tour T15, plus les instructions de début d'opération XOR en fin de seizième tour T16.

Le procédé de contre-mesure selon l'invention appliqué à cet algorithme DES consiste à rendre imprédictible chacune des données manipulées par les instructions critiques. Ainsi, quel que soit le ou les bits cibles utilisés, le signal DPA(t) sera toujours nul.

En ce qui concerne l'application du procédé de contre-mesure selon l'invention à l'algorithme DES, il faut donc appliquer la contre-mesure aux instructions critiques de début de DES et aux instructions critiques de fin de DES, pour être totalement protégé.

Dans le DES, toutes les données manipulées par des instructions critiques sont une donnée de sortie ou des données dérivées d'une donnée de sortie d'une opération SBOX.

En effet, en début de DES, les données qui peuvent être prédites sont les données a et g du premier tour T1. La donnée a est la donnée de sortie de l'opération SBOX du premier tour. La donnée g est calculée à partir de la donnée a, puisque g = P PERM(a) XOR L0. g est donc une donnée dérivée de la donnée de sortie a de l'opération SBOX du premier tour. Ainsi, toutes les données manipulées par les instructions critiques de début de DES découlent directement ou indirectement de la donnée de sortie a de l'opération SBOX du premier tour.

En ce qui concerne la fin de DES, les données qui peuvent être prédites sont la donnée a du seizième tour T16 et la donnée g du quatorzième tour T14, g étant égale à L15.

La donnée a est la donnée de sortie de l'opération SBOX du seizième tour T16.

Quant à la donnée L15, elle se calcule, dans l'exécution normale de l'algorithme DES, à partir de la donnée de sortie a de l'opération SBOX du quatorzième tour T14 : L15 = P PERM(a) XOR L14.

Si on rend imprédictibles les données de sortie a de ces opérations SBOX particulières, on rend aussi imprédictibles toutes les données dérivées : on rend donc imprédictibles toutes les données manipulées par les instructions critiques de l'algorithme DES. Si on considère que ces opérations SBOX constituent des premiers moyens pour fournir une donnée de sortie S=a à partir d'une donnée d'entrée E=b, le procédé de contre-mesure appliqué à l'algorithme DES consiste à utiliser d'autres moyens pour rendre imprédictibles la donnée de sortie, en sorte que cette donnée de sortie et/ou des données dérivées manipulées par les instructions critiques soient toutes imprédictibles.

Ces autres moyens peuvent comprendre différents moyens. Ils sont calculés à partir des premiers moyens en appliquant un OU exclusif avec une valeur aléatoire ou une valeur aléatoire dérivée sur l'une et/ou sur l'autre des données d'entrée et de sortie des premiers moyens.

L'utilisation de cette valeur aléatoire est telle que le résultat en sortie, c'est à dire, le message chiffré reste juste.

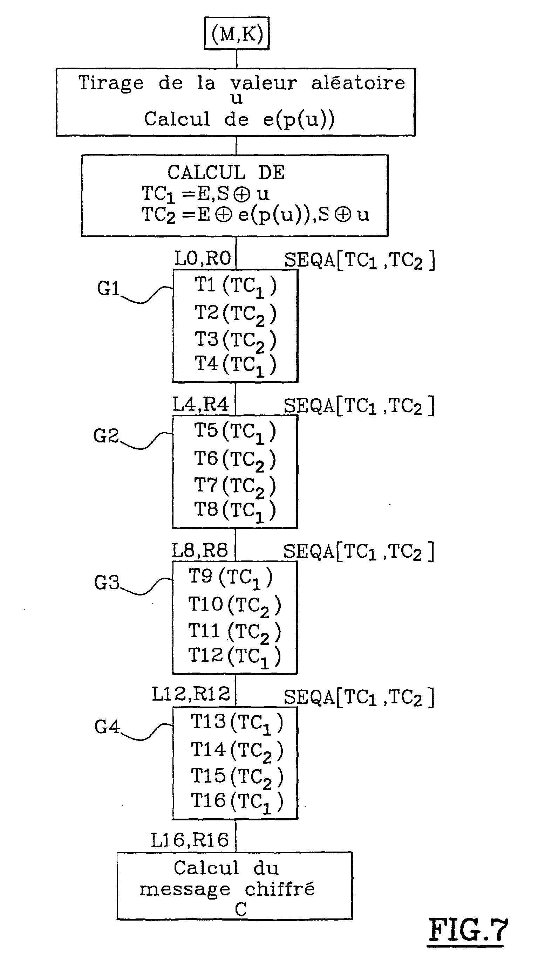

La figure 7 représente un premier mode de réalisation de l'invention. Dans ce mode de réalisation, on répartit les seize tours de l'algorithme DES en quatre groupes G1 à G4 de quatre tours successifs. Le groupe G1 comprend ainsi les tours T1 à T4, le groupe G2, les tours T5 à T8, le groupe G3, les tours T9 à T12 et le groupe G4, les tours T13 à T16.

Dans une exécution classique de l'algorithme DES, on a vu que chaque tour comprend l'utilisation de premiers moyens $TC_0$ dans une opération SBOX.

Dans le premier mode d'application du procédé de contre-mesure, on calcule d'autres moyens en faisant un OU EXCLUSIF avec une valeur aléatoire u et/ou avec une valeur dérivée e(p(u)) sur l'une et/ou l'autre des données d'entrée et de sortie des premiers moyens $TC_0$. Puis on applique une séquence SEQA d'exécution identique sur chaque groupe, qui consiste à utiliser ces autres moyens calculés.

Selon l'invention, on utilise une valeur aléatoire u qui est une donnée de 32 bits. On peut par exemple tirer une valeur aléatoire de 32 bits, ou bien tirer une valeur aléatoire de 4 bits et les recopier 8 fois pour obtenir la valeur aléatoire u sur 32 bits.

On calcule alors la variable dérivée égale à e(p(u)), où p(u) correspond au résultat de l'opération P PERM appliquée sur la valeur u et où e(p(u)) est le résultat de l'opération EXP PERM appliquée à la valeur p(u).

On peut alors calculer les autres moyens utilisés dans l'invention.

Dans l'exemple représenté en référence à la figure 7, ces autres moyens comprennent des deuxièmes moyens $TC_2$ et des troisièmes moyens $TC_1$.

Les deuxièmes moyens $TC_2$ sont utilisés dans le deuxième tour et l'avant-dernier tour de chaque groupe : c'est à dire, dans T2, T3 de G1, T6, T7 de G2, T10, T11 de G3 et T14 et T15 de G4.

Les deuxièmes moyens $TC_2$ sont utilisés dans le deuxième tour et l'avant-dernier tour de chaque groupe : c'est à dire, dans T2, T3 de G1, T6, T7 de G2, T10, T11 de G3 et T14 et T15 de G4.

Les deuxièmes moyens $TC_2$ sont calculés en appliquant un OU EXCLUSIF avec la variable aléatoire dérivée e(p(u)) sur la donnée d'entrée E et en appliquant un OU EXCLUSIF avec la valeur aléatoire u sur la donnée de sortie S des premiers moyens $TC_0$, ce qui peut s'écrire : $TC_2$=(E⊕e(p(u)), S⊕u).

Les troisièmes moyens $TC_1$ sont utilisés dans le premier tour et le dernier tour de chaque groupe. C'est à dire dans T1, T4 de G1, T5, T8 de G2, T9, T12 de G3 et T13, T16 de G4.

Les troisièmes moyens $TC_1$ sont calculés en appliquant un OU EXCLUSIF avec la variable aléatoire u sur la donnée de sortie S des premiers moyens $TC_0$, ce qui peut s'écrire : $TC_1$=(E, S⊕u).

Le programme de calcul consiste alors au début de l'exécution de l'algorithme, à tirer une valeur aléatoire u, dans l'exemple sur 4 bits, à calculer la variable aléatoire dérivée e(p(u)), puis à calculer les différents moyens utilisés dans la séquence d'exécution SEQA. Dans l'exemple, il faut calculer les deuxièmes et troisièmes moyens $TC_2$ et $TC_1$.

On obtient, à la sortie de chaque groupe, le résultat juste pour les paramètres de sortie. Ainsi, les paramètres de sortie L4 et R4 du premier groupe G1, L8 et R8 du deuxième groupe G2, L12 et R12 du troisième groupe G3, L16 et R16 du quatrième groupe G4 sont justes quelle que soit la variable aléatoire tirée.

Quand on a effectué tous les tours, on obtient les paramètres justes L16 et R16 qui vont permettre de calculer le message chiffré C juste.

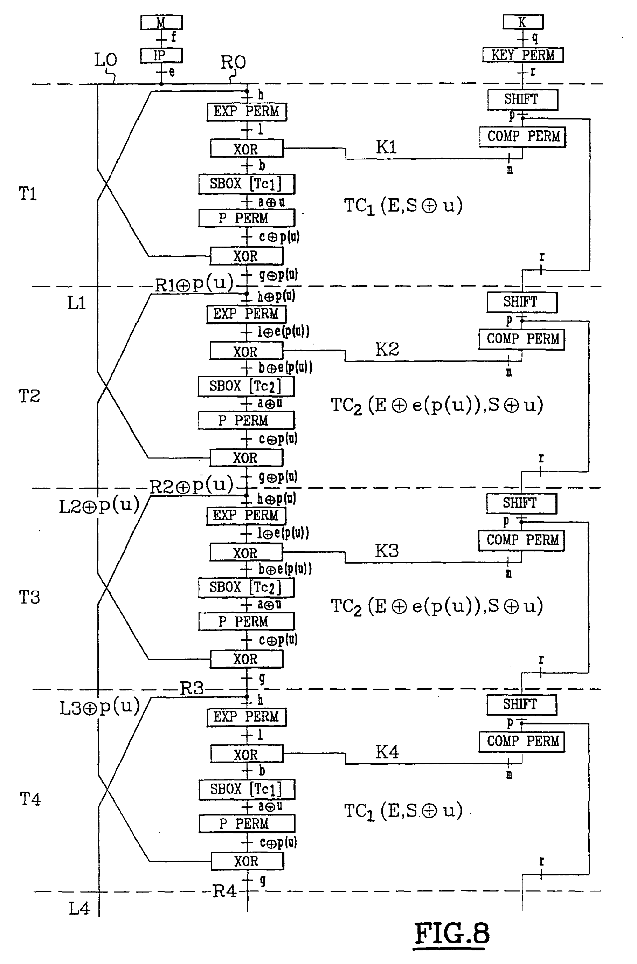

Par contre, à l'intérieur des groupes, certains résultats intermédiaires n'ont pas les mêmes valeurs selon la séquence utilisée, mais des valeurs correspondant à l'opération OU EXCLUSIF avec la valeur aléatoire u ou avec la valeur aléatoire dérivée e(p(u)), comme on va le montrer par référence aux figures 3 et 8.

La figure 8 montre l'organigramme détaillé des quatre tours T1, T2, T3 et T4 du premier groupe G1, dans la séquence SEQA d'exécution selon l'invention.

Dans cette séquence, le tour T1 utilise les troisièmes moyens $TC_1$. En sortie de l'opération SBOX, on obtient donc la donnée modifiée aléatoirement a⊕u (Figure 8), au lieu de la donnée a selon la séquence normale du DES, c'est à dire sans contre-mesure (Figure 3).

Avec la séquence SEQA d'exécution selon l'invention, l'opération P PERM du premier tour T1 qui est une simple permutation va donc également fournir en sortie une donnée modifiée aléatoirement égale à c⊕p(u).

La donnée qui est obtenue par l'opération XOR entre une donnée c⊕p(u) et la donnée L0, va aussi fournir en sortie une donnée modifiée aléatoirement g⊕p(u). Cette donnée appliquée à l'opération EXP PERM va fournir en sortie la donnée modifiée aléatoirement notée l⊕e(p(u)).

Ainsi, avec les troisièmes moyens $TC_1$ du tour T1 on obtient toutes les données modifiées aléatoirement suivantes :

- dans le tour T1 : a⊕u, c⊕p(u), g⊕p(u);
- dans le tour T2 : R1⊕p(u), h⊕p(u), 1⊕e(p(u), b⊕(p(u);
- dans le tour T3 : L2⊕p(u).

On arrive alors aux deuxièmes moyens $TC_2$ utilisés dans le tour T2. D'après leur définition : E⊕(p(u), S⊕u, en appliquant en entrée la donnée modifiée aléatoirement b⊕e(p(u), on obtient en sortie la donnée modifiée aléatoirement a⊕u. En conduisant ce raisonnement jusqu'à la fin du tour T4, et en remarquant que p(u)⊕p(u)=0, on obtient en sortie du tour T4, les données L4, R4 non modifiées.

En outre, on constate que pour toutes les instructions critiques de début de DES, les instructions critiques vont manipuler, des données modifiées de manière aléatoire.

Avec un tel procédé de contre-mesure, on doit prévoir en début de DES le tirage de la valeur aléatoire u et le calcul des moyens utilisés dans la séquence d'exécution SEQA. Ces moyens calculés à chaque exécution du DES, sont mémorisés, le temps de l'exécution, en mémoire de travail, les premiers moyens $TC_0$ qui servent au calcul étant eux mémorisés en mémoire programme.

En revenant à la figure 7, on pourra noter, que l'on n'a pas besoin de contre-mesure dans les groupes du milieu G2 et G3, puisqu'ils ne contiennent pas d'instructions critiques au sens attaque DPA. On pourrait donc n'appliquer la séquence d'exécution SEQA du procédé de contre-mesure qu'au premier et au dernier groupe G1 et G4. Il suffirait d'utiliser ensuite les premiers moyens ($TC_0$) dans les groupes G2 et G3.

Mais le fait de d'appliquer le procédé de contre-mesure à tous les groupes donne une cohérence à l'ensemble.

Ainsi, on applique la séquence SEQA à chacun des groupes G1 à G4.

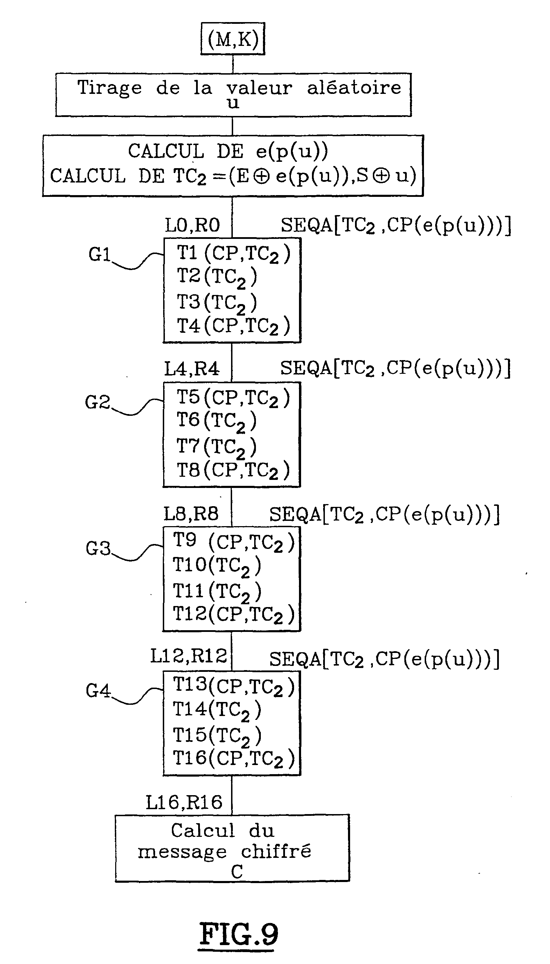

Un deuxième mode de réalisation du procédé de contre-mesure est représentée sur la figure 9. Ce deuxième mode de réalisation est en fait une variante du premier.

L'intérêt de cette variante est de n'utiliser comme autres moyens dans la séquence SEQA, que les deuxièmes moyens $TC_2$. En effet, on a vu que les différents moyens $TC_0$, $TC_1$, $TC_2$ correspondent en pratique à des tables de constantes comprenant chacune huit tables de constantes élémentaires, qu'il faut recalculer en ce qui concerne les moyens $TC_1$ et $TC_2$ à chaque nouvelle exécution du DES, et garder en mémoire de travail.

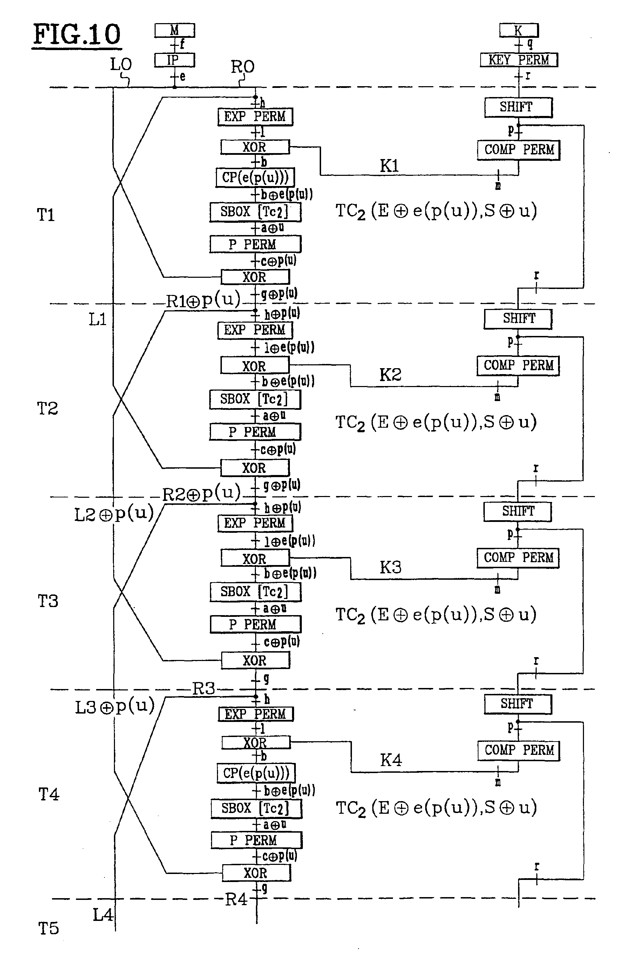

Cette variante consiste donc à utiliser uniquement les deuxièmes moyens $TC_2$ dans la séquence SEQA. Pour cela, on prévoit dans le programme de calcul des premiers et derniers tours de chaque groupe, une opération OU EXCLUSIF supplémentaire CP avec la variable aléatoire dérivée e(p(u)), pour obtenir en entrée des deuxièmes moyens la donnée b⊕(p(u)). On note cette opération CP(e(p(u))) sur les figures. Si on se reporte à la figure 10 représentant l'organigramme détaillé de la séquence SEQA d'exécution des quatre tours T1 à T4 du premier groupe G1, il s'agit donc d'appliquer en entrée de l'opération SBOX des tours T1 et T4 une variable b⊕e(p(u)). L'opération supplémentaire CP plus les deuxièmes moyens $TC_2$ équivalent aux troisièmes moyens $TC_1$ utilisés dans le premier mode de réalisation de l'invention.

On y gagne en temps de calcul, car l'opération CP n'est exécutée que deux fois dans un groupe, soit 8 fois pour une séquence SEQA complète sur les quatre groupes, alors que le calcul d'une table nécessite de faire cette opération b⊕e(p(u)) pour toutes les données d'entrée de cette table.

On notera que l'opération OU EXCLUSIF supplémentaire CP avec la variable e(p(u)) peut être placée en divers endroits des premiers et derniers tours, soit entre l'opération EXP PERM et l'opération XOR ou entre l'opération XOR et l'opération SBOX.

On peut aussi remarquer que l'on peut utiliser une opération OU EXCLUSIF supplémentaire CP avec la variable aléatoire dérivée p(u), en plaçant cette opération supplémentaire CP(p(u) avant l'opération EXP PERM. On obtient en sortie 1⊕e(p(u)), et donc on aura ensuite b⊕e(p(u)).

Dans tous ces cas de figures, on obtient la donnée b⊕e(p(u)) en entrée de l'opération SBOX.

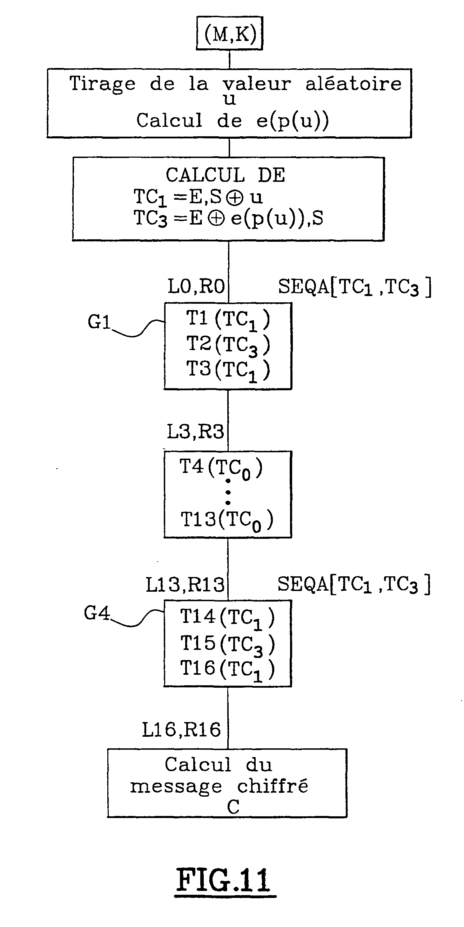

La figure 11 représente un troisième exemple de réalisation d'un procédé de contre-mesure selon l'invention.

Dans ce mode de réalisation, on forme un premier groupe G1 avec les trois premiers tours T1, T2, T3 et un autre groupe G4 avec les trois derniers tours T14, T15, T16. On applique sur chaque groupe la séquence d'exécution SEQA avec les autres moyens pour certains tours au moins.

Pour les autres tours non compris dans les groupes, c'est à dire pour les tours T4 à T13, on applique les premiers moyens $TC_0$.

En sortie de chaque groupe G1, G4, on obtient le bon résultat en sortie L3, R3 et L16, R16, quelle que soit la variable aléatoire u tirée.

Les autres moyens sont dans l'exemple les troisièmes moyens $TC_1$ déjà vus en relation avec le premier mode de réalisation et des quatrièmes moyens $TC_3$.

Ces quatrièmes moyens sont calculés par rapport aux premiers moyens $TC_0$ en appliquant un OU EXCLUSIF sur la donnée E d'entrée, avec la variable aléatoire dérivée e(p(u)).

Ainsi, après avoir tiré la valeur aléatoire u, et calculé la variable aléatoire dérivée, on calcule les différents moyens utilisés dans la séquence d'exécution SEQA. Puis on applique cette séquence SEQA sur le premier groupe. On obtient en sortie les paramètres L3, R3. On exécute les tours suivants T4 à T13 avec les premiers moyens $TC_0$. En fin de tour T13, on applique la séquence SEQA sur le groupe G4. On obtient les paramètres L16, R16 qui vont servir à calculer le message chiffré C.

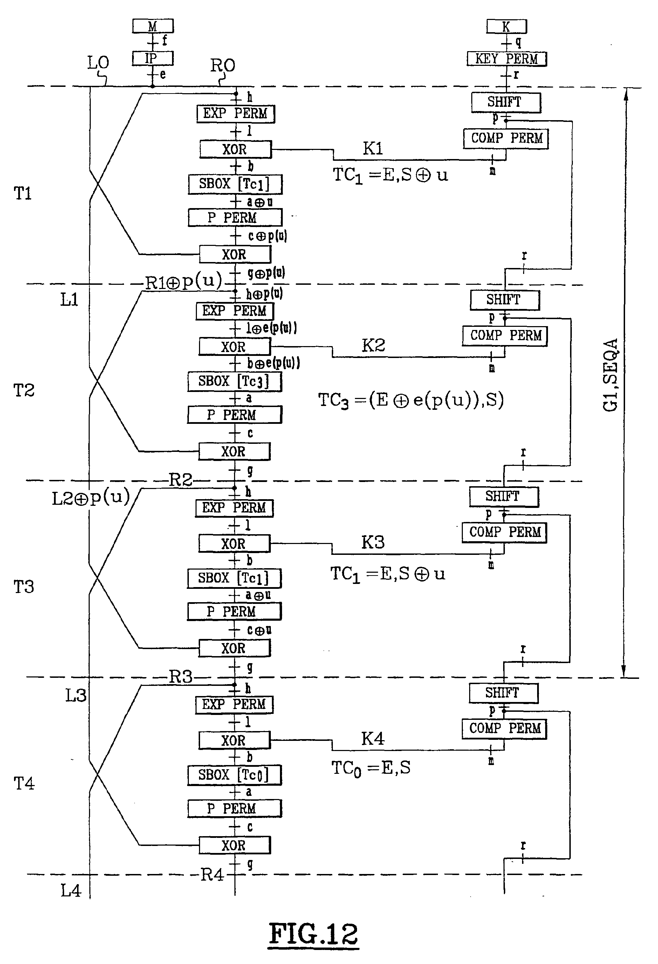

La figure 12 est un organigramme détaillé correspondant.

Il apparaît clairement sur cet organigramme que l'on obtient des données modifiées aléatoirement pour toutes les instructions critiques de ces tours. Les données L3 et R3 en sortie du troisième tour ne sont pas modifiées, ce qui permet de continuer l'exécution de l'algorithme, en passant au tour T4 auquel on applique les premiers moyens $TC_0$ selon l'exécution normale de l'algorithme.

Sur cette figure, on peut remarquer que dans l'opération SBOX du troisième tour T3, on pourrait utiliser les premiers moyens $TC_0$ à la place des troisièmes moyens calculés $TC_1$, en prévoyant une opération OU EXCLUSIF supplémentaire CP en sortie de l'opération SBOX, pour faire un OU exclusif de la sortie avec la variable aléatoire u, pour obtenir la donnée a⊕u en entrée de l'opération XOR. C'est une solution équivalente.

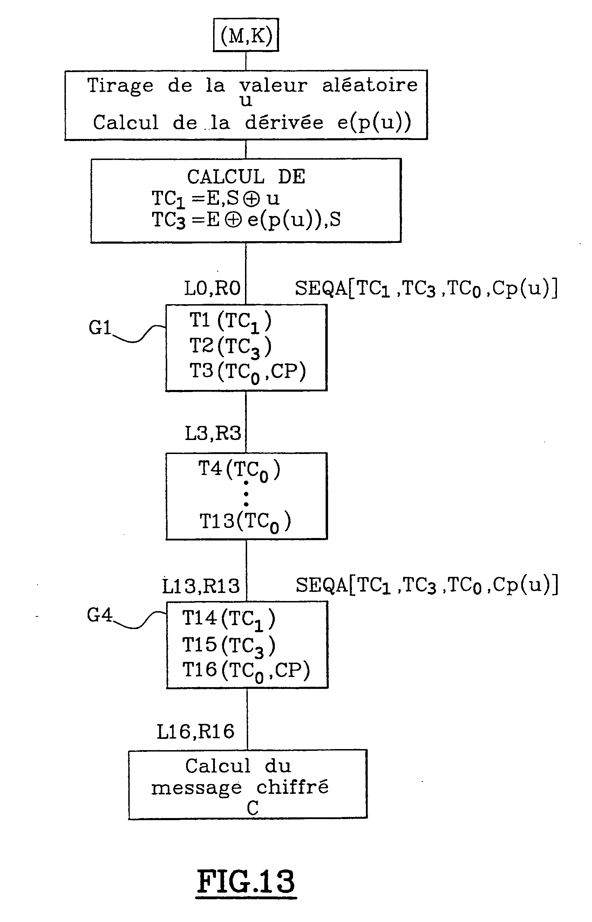

La figure 13 représente un organigramme d'exécution utilisant cette variante. Pour le troisième tour des deux groupes G1 et G4, on utilise dans la séquence d'exécution SEQA, les premiers moyens $TC_0$ suivis en sortie de l'instruction OU EXCLUSIF supplémentaire avec la variable u, ce qui est noté T3($TC_0$, CP(u)).

De manière générale, dans le procédé de contre-mesure selon l'invention, on peut donc prévoir dans la séquence d'exécution SEQA et pour un ou plusieurs tours, une instruction OU EXCLUSIF supplémentaire CP en entrée ou en sortie des moyens utilisés avec la variable u ou une variable aléatoire dérivée p(u) ou e(p(u)) selon les cas.

La présente invention s'applique à l'algorithme de cryptographie à clé secrète DES, pour lequel plusieurs exemples d'application non limitatifs ont été décrits. Il s'applique plus généralement à un algorithme de cryptographie à clé secrète à seize tours de calculs, dont les instructions critiques se situent parmi les instructions des trois premiers ou trois derniers tours.

Un composant électronique 1 mettant en oeuvre un procédé de contre-mesure selon l'invention dans un algorithme de cryptographie à clé secrète DES, comprend typiquement, comme représenté sur la figure 10, un microprocesseur $\mu$P, une mémoire programme 2 et une mémoire de travail 3. Pour pouvoir gérer l'utilisation des différents moyens $TC_0$, $TC_1$, $TC_2$ selon l'invention, qui sont, en pratique, des tables de constantes mémorisées en mémoire programme, des moyens 4 de génération d'une valeur aléatoire entre 0 et 1, sont prévus qui, si on se reporte aux organigrammes des figures 7 et 11, fourniront la valeur aléatoire u à chaque exécution du DES. Un tel composant peut tout particulièrement être utilisé dans une carte à puce 5, pour améliorer son inviolabilité.

**Revendications**

1. Procédé de contre-mesure contre des attaques par analyse différentielle de consommation en courant dans un composant électronique mettant en oeuvre un algorithme cryptographique à clé secrète (K), la mise en oeuvre de l'algorithme comprenant l'utilisation de premiers moyens de traitement numérique (TC0) pour fournir une donnée de sortie (S) à partir d'une donnée d'entrée (E), l'utilisation de moyens de calcul pour produire des données dérivées de la donnée de sortie, et l'utilisation d'instructions critiques au sens des dites attaques pour manipuler la donnée de sortie et/ou les données dérivées de la donnée de sortie,
**caractérisé en ce que** le procédé de contre-mesure comprend le remplacement des premiers moyens par d'autres moyens (TC1) de traitement numérique, définis à partir des dits premiers moyens, à partir d'une valeur aléatoire (u) et / ou à partir d'une valeur aléatoire dérivée (e(p(u))) de la valeur aléatoire pour, à partir soit de la donnée d'entrée (E) des premiers moyens soit de la donnée d'entrée (E) des premiers moyens combinée par un OU EXCLUSIF à la valeur aléatoire dérivée (E / e(p(u))), fournir soit la donnée de sortie (S) des premiers moyens soit la donnée de sortie des premiers moyens combinée par un OU EXCLUSIF à la valeur aléatoire (S / u), en sorte que la donnée produite par les autres moyens et les données dérivées de la donnée produite par les autres moyens soient imprédictibles.

2.  Procédé selon la revendication 1,
    dans lequel les premiers moyens de traitement numérique sont une opération de substitution associant à chaque donnée d'entrée une donnée de sortie, et dans lequel les autres moyens sont également des opérations de substitution associant à la donnée d'entrée (E) des premiers moyens ou à la donnée d'entrée (E) des premiers moyens combinée par un OU EXCLUSIF à la valeur aléatoire dérivée (E / e(p(u))), soit la donnée de sortie (S) des premiers moyens soit la donnée de sortie des premiers moyens combinée par un OU EXCLUSIF à la valeur aléatoire (S / u), et dans lequel les moyens de calcul produisant des données dérivées de la donnée de sortie des premiers moyens sont des opérations de permutation et / ou des opérations de combinaison de type OU EXCLUSIF.

3.  Procédé de contre-mesure selon la revendication 1 ou 2, dans lequel la mise en oeuvre de l'algorithme comprenant seize tours de calcul (T1, ...,T16), chaque tour utilisant des premiers moyens (TC0) pour fournir une donnée de sortie à partir d'une donnée d'entrée, la donnée de sortie et/ou des données dérivées étant manipulées par des instructions critiques dans les trois premiers (T1, T2, T3) et les trois derniers tours (T14, T15, T16).

4.  Procédé selon la revendication 3, au cours duquel on forme un premier groupe (G1) comprenant les trois premiers tours au moins et un dernier groupe (G4) comprenant les trois derniers tours au moins, et en ce que l'on associe au premier groupe (G1) et au dernier groupe (G4) une séquence d'exécution (SEQA) utilisant les autres moyens (TC1, TC2) dans certains tours au moins.

5.  Procédé de contre-mesure selon la revendication 4, **caractérisé en ce que** l'on forme quatre groupes (G1,...G4) de quatre tours successifs chacun (T1,...T4) et, **en ce que** l'on applique au moins au premier groupe (G1) et au dernier groupe (G4) la dite séquence d'exécution (SEQA).

6.  Procédé de contre-mesure selon la revendication 5, **caractérisé en ce que** la dite séquence (SEQA) est exécutée dans chacun des groupes (G1,...G4).

7.  Procédé selon l'une des revendications 5 à 6,
    dans lequel les autres moyens comprennent :

    • des deuxièmes moyens (TC2) qui sont des opérations de substitution associant à la donnée d'entrée (E) combinée par un OU EXCLUSIF à la valeur aléatoire dérivée (E / e(p(u))), la donnée de sortie combinée par un OU EXCLUSIF à la valeur aléatoire (S / u), et
    • des troisièmes moyens (TC1) qui sont des opérations de substitution associant à la donnée d'entrée (E), la donnée de sortie combinée par un OU EXCLUSIF à la valeur aléatoire (S /u),

    et dans lequel la séquence d'exécution comprend :

    • dans le premier tour et dans le dernier tour d'un groupe, le remplacement des premiers moyens par les troisièmes moyens, et
    • dans le deuxième tour et dans l'avant dernier tour d'un groupe, le remplacement des premiers moyens par les deuxièmes moyens.

8.  Procédé selon l'une des revendications 5 à 6,
    dans lequel les autres moyens comprennent des troisièmes moyens qui sont des opérations de substitution associant à la donnée d'entrée (E), la donnée de sortie combinée par un OU EXCLUSIF à la valeur aléatoire (S / u), et dans lequel la séquence de substitution comprend :

    • dans tous les tours d'un groupe, le remplacement des premiers moyens (TC1) par les deuxièmes moyens (TC2),
    • dans le premier tour et le dernier tour d'un groupe, la combinaison de la donnée d'entrée avec la valeur aléatoire dérivée, le résultat de la combinaison étant ensuite fourni comme donnée d'entrée aux deuxièmes moyens.

9.  Procédé de contre-mesure selon l'une quelconque des revendications précédentes, **caractérisé en ce que** chaque exécution de l'algorithme comprend le tirage d'une valeur aléatoire (u), et le calcul des autres moyens.

**10.** Procédé de contre-mesure selon l'une quelconque des revendications précédentes, **caractérisé en ce que** les différents moyens sont des tables de constantes.

**11.** Procédé de contre-mesure selon l'une quelconque des revendications précédentes, **caractérisé en ce que** les différents moyens sont utilisés en combinaison avec une opération OU exclusif supplémentaire (CP) avec la valeur aléatoire ou une valeur dérivée (p(u), e(p(u'))).

**12.** Composant électronique de sécurité comprenant un microprocesseur, une mémoire programme et une mémoire de travail permettant la mise en oeuvre d'un algorithme cryptographique à clé secrète (K), la mémoire programme mémorisant des premiers moyens (TC0) de traitement numérique pour fournir une donnée de sortie (S) à partir d'une donnée d'entrée (E), le composant comprenant également des moyens pour mettre en oeuvre des opérations produisant des données dérivées de la donnée de sortie , et des moyens pour mettre en oeuvre des instructions critiques dudit algorithme au sens d'attaques par analyse différentielle de consommation en courant, les dites instructions critiques manipulant la donnée de sortie et / ou les données dérivées de la donnée de sortie,

le composant étant **caractérisé en ce qu'**il comprend des moyens de mise en oeuvre d'un procédé de contre-mesure contre lesdites attaques selon l'une quelconque des revendications 1 à 11précédentes, comprenant

• des moyens (4) de génération d'une valeur aléatoire (u), et
• d'autres moyens (TC1, TC2) de traitement numérique mémorisés en mémoire de travail (3), calculés à chaque nouvelle exécution de l'algorithme à partir des dits premiers moyens, à partir d'une valeur aléatoire (u) et / ou à partir d'une valeur aléatoire dérivée (e(p(u))) de la valeur aléatoire, les autres moyens fournissant soit la donnée de sortie (S) des premiers moyens soit la donnée de sortie des premiers moyens combinée par un OU EXCLUSIF à la valeur aléatoire (S / u), à partir soit de la donnée d'entrée (E) des premiers moyens soit de la donnée d'entrée (E) des premiers moyens combinée par un OU EXCLUSIF à la valeur aléatoire dérivée (E / e (p(u))).

**13.** Carte à puce comprenant un composant électronique de sécurité selon la revendication 12.

**Claims**

**1.** Countermeasure method against attacks by differential analysis of current consumption in an electronic component using a secret key cryptography algorithm (K), the implementation of the algorithm comprising the use of first digital processing means (TC0) in order to supply an output data item (S) from an input data item (E), the use of calculation means to supply data derived from the output data, and the use of instructions that are critical for said attacks in order to manipulate the output data and/or the data derived from the output data,
**characterised in that** the countermeasure method comprises the replacement of the first means with other digital processing means (TC1), defined from said first means, from a random value (u) and/or from a derived random value (e(p(u))) of the random value, based on either the input data item (E) of the first means or on the input data item (E) of the first means combined by an EXCLUSIVE OR operation with the derived random value (E / e(p(u))), in order to supply either the output data (S) of the first means or the output data of the first means combined by an EXCLUSIVE OR operation with the random value (S / u), so that the data supplied by the other means and the data derived from the data supplied by the other means are unpredictable.

**2.** Method according to claim 1,
in which the first digital processing means perform a replacement operation associating an output data item with each input data item, and in which the other means also perform replacement operations associating first means to the input data item (E) or first means combined by an EXCLUSIVE OR operation with the derived random value (E / e(p(u))) to the input data item (E), either the output data item (S) of the first means or the output data item of the first means being combined by an EXCLUSIVE OR operation with the random value (S / u),
and in which the calculation means that supply the derived data of the output data of the first means consist in permutation operations and/or EXCLUSIVE OR combination operations.

**3.** Countermeasure method according to claim 1 or 2, in which the implementation of the algorithm comprises sixteen calculation cycles (T1 ... T16), each cycle using first means (TC0) to supply an output data item from an input data item, the output data item and/or the derived data being manipulated by critical instructions in the first three (T1, T2, T3) and last three (T14, T15, T16) cycles.

4. Method according to claim 3, during which a first group (G1) comprising at least the first three cycles and a last group (G4) comprising at least the last three cycles are formed, and in which an execution sequence (SEQA) is associated with the first group and the last group, using the other means (TC1, TC2) at least in certain cycles.

5. Countermeasure method according to claim 4, **characterised in that** four groups (G1 ... G4) are formed, each comprising four successive cycles (T1 ... T4), and **in that** said execution sequence (SEQA) is applied at least to the first group (G1) and to the last group (G4).

6. Countermeasure method according to claim 5, **characterised in that** said sequence (SEQA) is executed in each one of the groups (G1 ... G4).

7. Method according to either one of the claims 5 or 6,
in which the other means comprise:

  - second means (TC2) which consist in replacement operations associating the output data item combined by an EXCLUSIVE OR operation with the random value (S / u) to the input data item (E) combined by an EXCLUSIVE OR operation with the derived random value (E / e(p(u))), and
  - third means (TC1) which consist in replacement operations associating the output data item combined by an EXCLUSIVE OR operation with the random value (S / u) to the input data item (E),

and in which the execution sequence comprises:

  - in the first and last cycle of a group, replacing the first means with the third means, and
  - in the second and penultimate cycle of a group, replacing the first means with the second means.

8. Method according to either one of the claims 5 or 6,
in which the other means comprise third means that consist in replacement operations associating the input data item (E) with the output data item combined by an EXCUSIVE OR operation with the random value (S / u),
and in which the replacement sequence comprises:

  - in all the cycles of a group, replacing the first means (TC1) with the second means (TC2),
  - in the first and last cycle of a group, combining the input data item with the derived random value, the result of the combination then being supplied to the second means as input data.

9. Countermeasure method according to any one of the preceding claims, **characterised in that** each execution of the algorithm requires a random value (u) to be obtained and the other means to be calculated.

10. Countermeasure method according to any one of the preceding claims, **characterised in that** the various means are tables of constants.

11. Countermeasure method according to any one of the preceding claims, **characterised in that** the various means are used in combination with an additional EXCLUSIVE OR operation (CP) with the random value or a derived value (p(u)), e(p(u)).

12. Electronic security component comprising a microprocessor, a program memory and a working memory allowing the implementation of a secret key cryptography algorithm (K), the program memory storing first digital processing means (TC0) that supply an output data item (S) from an input data item (E), the component also comprising means for implementing operations that produce data derived from the output data item, and means for implementing the instructions of said algorithm that are critical for attacks by differential analysis of current consumption, said critical instructions manipulating the output data item and/or the data derived from the output data item,
the component being **characterised in that** it comprises means for implementing a countermeasure method against said attacks according to one of the preceding claims from 1 to 11, comprising

  - means (4) for generating a random value (u), and
  - other digital processing means (TC1, TC2) stored in the working memory (3) calculated at each execution of the algorithm from said first means, from a random value (u) and/or from a random value (e(p(u))) derived from the random value, the other means supplying either the output data item (S) of the first means or the output data item of the first means combined by an EXCLUSIVE OR operation with the random value (S / u), either from the input data item (E) of the first means or from the input data item (E) of the first means combined by an EXCLUSIVE OR operation with the derived random value (E / e(p(u))).

13. Chip card comprising an electronic security component according to claim 12.

**Patentansprüche**

1. Gegenmaßnahmen-Verfahren gegen Angriffe per Differentialanalyse des Stromverbrauchs in einer einen kryptographischen Algorithmus mit geheimem Schlüssel (K) umsetzenden elektronischen Komponente, wobei die Umsetzung des Algorithmus die Nutzung der ersten digitalen Verarbeitungsmittel (TC0) umfasst, um eine Ausgangsangabe (S) ausgehend von einer Eingangseingabe (E) zu liefern, die Nutzung von Berechnungsmitteln, um von der Ausgangsangabe abgeleitete Daten zu produzieren, und die Nutzung von kritischen Anweisungen im Sinne der genannten Angriffe, um die Ausgangsangabe und / oder die von der Ausgangsangabe abgeleiteten Daten zu behandeln,
   **dadurch gekennzeichnet, dass** das Gegenmaßnahmen-Verfahren den Ersatz der ersten Mittel durch weitere digitale Verarbeitungsmittel (TC1) umfasst, die ausgehend von den genannten ersten Mitteln, ausgehend von einem zufällige Wert (u) und / oder ausgehend von einem zufälligen abgeleiteten Wert (e(p(u))) des zufälligen Wertes definiert werden, um entweder ausgehend von der Eingangsangabe (E) der ersten Mittel oder der Eingangsangabe (E) der durch ein EXKLUSIVES ODER mit dem abgeleiteten zufälligen Wert (E/e(p(u))) kombinierten ersten Mittel entweder die Ausgangsausgabe (S) der ersten Mittel oder die Ausgangsausgabe der durch ein EXKLUSIVES ODER mit dem zufälligen Wert (S / u) kombinierten ersten Mittel zu liefern, so dass die durch die weiteren Mittel produzierte Angabe und die von der von den weiteren Mitteln produzierten Angabe abgeleiteten Daten unvorhersehbar sind.

2. Verfahren gemäß Anspruch 1,
   bei dem die ersten digitalen Verarbeitungsmittel eine jeder Eingangsangabe eine Ausgangsangabe zuordnende Substitutionsoperation sind und bei dem die weiteren Mittel ebenfalls Substitutionsoperationen sind, die der Eingangsangabe (E) der ersten Mittel oder der durch ein EXKLUSIVES ODER mit dem abgeleiteten zufälligen Wert (E(e(p(u))) kombinierten Eingangseingabe (E) der ersten Mittel entweder die Ausgangsangabe (S) der ersten Mittel oder die durch ein EXKLUSIVES ODER mit dem zufälligen Wert (S / u) kombinierten Ausgangsangabe der Mittel zuordnet
   und bei dem die von der Ausgangsangabe der ersten Mittel abgeleitete Daten produzierende Berechnungsmittel Permutationsoperationen und / oder Kombinationsoperationen vom Typ EXKLUSIVES ODER sind.

3. Gegenmaßnahmen-Verfahren gemäß Anspruch 1 oder 2, in dem die Umsetzung des Algorithmus sechzehn Berechnungssätze (T1, ..., T16) umfasst, wobei jeder Berechnungssatz erste Mittel (TC0) nutzt, um eine Ausgangsangabe ausgehend von einer Eingangsangabe liefert, wobei die Ausgangsangaben und / oder die abgeleiteten Daten von den kritischen Anweisungen in den drei ersten (T1, T2, T3) und den drei letzten Sätzen (T14, T15, T16) behandelt werden.

4. Verfahren gemäß Anspruch 3, in dessen Verlauf eine erste Gruppe (G1) mit wenigstens den drei ersten Sätzen gebildet wird und eine letzte Gruppe (G4) mit wenigstens den drei letzten Sätzen und dass der ersten Gruppe (G1) und der letzten Gruppe (G4) eine die weiteren Mittel (TC1, TC2) in wenigstens bestimmten Berechnungssätzen nutzende Ausführungssequenz (SEQA) zugeordnet wird.

5. Gegenmaßnahmen-Verfahren gemäß Anspruch 4, **dadurch gekennzeichnet, dass** vier Gruppen (G1, ..., G4) aus vier jeweils sukzessiven Sätzen (T1, ..., T4) gebildet werden und dass die genannte Ausführungssequenz (SEQA) wenigstens auf die erste Gruppe (G1) und die letzte Gruppe (G4) angewendet wird.

6. Gegenmaßnahmen-Verfahren gemäß Anspruch 5, **dadurch gekennzeichnet, dass** die genannte Sequenz (SEQA) in jeder der Gruppen (G1, G4) ausgeführt wird.

7. Verfahren gemäß Anspruch 5 bis 6,
   in dem die weiteren Mittel Folgendes umfassen:

   * zweite Mittel (TC2), die der durch ein EXKLUSIVES ODER mit dem abgeleiteten zufälligen Wert (E/e(p(u))) kombinierten Eingangsangabe (E), dem zufälligen Wert (S / u) durch ein EXKLUSIVES ODER die kombinierte Ausgangsangabe zuordnende Substitutionsoperationen sind und

* dritte Mittel (TC1), die der Eingangsangabe (E) die durch ein EXKLUSIVES ODER mit dem zufälligen Wert (S / u) kombinierte Ausgangsangabe zuordnende Substitutionsoperationen sind,

und bei dem die Ausführungssequenz Folgendes umfasst:

* im ersten Satz und im letzten Satz einer Gruppe den Ersatz der ersten Mittel durch die dritten Mittel, und
* im zweiten Satz und im vorletzten Satz einer Gruppe den Ersatz der ersten Mittel durch die zweiten Mittel.

8. Verfahren gemäß Anspruch 5 bis 6, bei dem die weiteren Mittel dritte Mittel umfassen, die der Eingangsangabe (E) die durch ein EXKLUSIVES ODER mit dem zufälligen Wert (s / u) kombinierte Ausgangsangabe zuordnende Substitutionsoperationen sind, und bei dem die Substitutionssequenz Folgendes umfasst:

* in allen Sätzen einer Gruppe den Ersatz der ersten Mittel (TC1) durch die zweiten Mittel (TC2)
* im ersten Satz und im letzten Satz einer Gruppe die Kombination der Eingangseingabe mit dem abgeleiteten zufälligen Wert, wobei das Ergebnis der Kombination anschließend den zweiten Mitteln als Eingangseingabe geliefert wird.

9. Gegenmaßnahmen-Verfahren gemäß einem der vorherigen Ansprüche, **dadurch gekennzeichnet, dass** jede Ausführung des Algorithmus die Ziehung eines zufälligen Wertes (u) und die Berechnung der weiteren Mittel umfasst.

10. Gegenmaßnahmen-Verfahren gemäß einem der vorherigen Ansprüche, **dadurch gekennzeichnet, dass** die unterschiedlichen Mittel Konstantentafeln sind.

11. Gegenmaßnahmen-Verfahren gemäß einem der vorherigen Ansprüche, **dadurch gekennzeichnet, dass** die unterschiedlichen Mittel in Kombination mit einer zusätzlichen Operation exklusives ODER mit dem zufälligen Wert oder einem abgeleiteten Wert (p(u), e(p(u))) eingesetzt werden.

12. Elektronische Sicherheitskomponente mit einem Mikroprozessor, einem Programmspeicher und einem Arbeitsspeicher, die die Umsetzung eines kryptographischen Algorithmus mit geheimem Schlüssel (K) erlauben, wobei der Programmspeicher erste Mittel (TC0) zur digitalen Verarbeitung speichert, um eine Ausgangsangabe (S) ausgehend von einer Eingangsangabe (E) zu liefern, wobei die Komponente ebenfalls Mittel umfasst, um von der Ausgangsangabe abgeleitete Daten produzierende Operationen umzusetzen und Mittel, um kritische Anweisungen des genannten Algorithmus im Sinne von Angriffen per Differentialanalyse des Stromverbrauchs umzusetzen, wobei die genannten kritischen Anweisungen die Ausgangsangabe und / oder die von der Ausgangsangabe abgeleiteten Daten der Ausgangsangabe behandeln, wobei die Komponente **dadurch gekennzeichnet ist, dass** sie Umsetzungsmittel eines Gegenmaßnahmen-Verfahrens gegen die genannten Angriffe gemäß einem der vorherigen Ansprüche 1 bis 11 umfasst, mit

* Mitteln (4) zur Erzeugung eines zufälligen Wertes (u) und
* weiteren, im Arbeitsspeicher (3) gespeicherten, bei jeder neuen Ausführung des Algorithmus ausgehend von den genannten ersten Mitteln, ausgehend von einem zufälligen Wert (u) und / oder ausgehend von einem vom zufälligen Wert abgeleiteten zufälligen Wert (e(p(u))) berechneten Mitteln (TX1, TC2) zur digitalen Behandlung, wobei die weiteren Werte entweder die Ausgangsangabe (S) der ersten Mittel oder die durch ein EXKLUSIVES ODER mit dem zufälligen Wert (S / u) kombinierten Ausgangsangabe der ersten Mittel entweder ausgehend von der Eingangsangabe (E) der ersten Mittel oder von der durch ein EXKLUSIVES ODER mit dem zufälligen abgeleiteten Wert (E / e(p(u))) kombinierte Eingangsangabe (E) der ersten Mittel liefern.

13. Chipkarte mit einer elektronischen Sicherheitskomponente gemäß Anspruch 12.

EP 1 125 394 B1

## FIG.1

FIG.2

EP 1 125 394 B1

FIG.3

T12

L12

R12 — h

EXP PERM

l

XOR — K13

b

SBOX [Tc0]

a

P PERM

c

XOR

g

r

SHIFT

p

COMP PERM

m

T13

R13 — h

L13

EXP PERM

l

XOR — K14

b

SBOX [Tc0]

a

P PERM

c

XOR

g

r

SHIFT

p

COMP PERM

m

T14

R14 — h

L14

EXP PERM

l

XOR — K15

b

SBOX [Tc0]

a

P PERM

c

XOR

g

r

SHIFT

p

COMP PERM

m

T15

R15 — h

L15

EXP PERM

l

XOR — K16

b

SBOX [Tc0]

a

P PERM

c

XOR

g

r

SHIFT

p

COMP PERM

m

T16

R16 — g

L16

CALCUL DU MESSAGE
CHIFFRE C

**FIG.4**

FIG.5

FIG.6

| TC₀1 E=b1b2b3b4b5b6 | S=a1a2a3a4 |
|---|---|
| 000000 | 1101 |
| 000001 | 0101 |
| ⋮ | ⋮ |
| 111111 | 1010 |

FIG.14

$$(M,K)$$

Tirage de la valeur aléatoire u
Calcul de e(p(u))

CALCUL DE
$TC_1 = E, S \oplus u$
$TC_2 = E \oplus e(p(u)), S \oplus u$

L0,R0     SEQA[$TC_1, TC_2$]

G1
- T1 ($TC_1$)
- T2 ($TC_2$)
- T3 ($TC_2$)
- T4 ($TC_1$)

L4,R4     SEQA[$TC_1, TC_2$]

G2
- T5 ($TC_1$)
- T6 ($TC_2$)
- T7 ($TC_2$)
- T8 ($TC_1$)

L8,R8     SEQA[$TC_1, TC_2$]

G3
- T9 ($TC_1$)
- T10 ($TC_2$)
- T11 ($TC_2$)
- T12 ($TC_1$)

L12,R12     SEQA[$TC_1, TC_2$]

G4
- T13 ($TC_1$)
- T14 ($TC_2$)
- T15 ($TC_2$)
- T16 ($TC_1$)

L16,R16

Calcul du
message chiffré
C

## FIG.7

## FIG.8

$$\boxed{(\mathrm{M,K})}$$

$$\boxed{\text{Tirage de la valeur aléatoire } u}$$

$$\boxed{\begin{array}{c} \text{CALCUL DE } e(p(u)) \\ \text{CALCUL DE } TC_2 = (E \oplus e(p(u)), S \oplus u) \end{array}}$$

L0,R0          SEQA[$TC_2$, CP($e(p(u))$)]

G1 — $\boxed{\begin{array}{l} \text{T1 (CP,} TC_2 \text{)} \\ \text{T2(} TC_2 \text{)} \\ \text{T3(} TC_2 \text{)} \\ \text{T4(CP,} TC_2 \text{)} \end{array}}$

L4,R4          SEQA[$TC_2$, CP($e(p(u))$)]

G2 — $\boxed{\begin{array}{l} \text{T5(CP,} TC_2 \text{)} \\ \text{T6(} TC_2 \text{)} \\ \text{T7(} TC_2 \text{)} \\ \text{T8(CP,} TC_2 \text{)} \end{array}}$

L8,R8          SEQA[$TC_2$, CP($e(p(u))$)]

G3 — $\boxed{\begin{array}{l} \text{T9 (CP,} TC_2 \text{)} \\ \text{T10(} TC_2 \text{)} \\ \text{T11(} TC_2 \text{)} \\ \text{T12(CP,} TC_2 \text{)} \end{array}}$

L12,R12          SEQA[$TC_2$, CP($e(p(u))$)]

G4 — $\boxed{\begin{array}{l} \text{T13(CP,} TC_2 \text{)} \\ \text{T14(} TC_2 \text{)} \\ \text{T15(} TC_2 \text{)} \\ \text{T16(CP,} TC_2 \text{)} \end{array}}$

L16,R16

$$\boxed{\begin{array}{c} \text{Calcul du} \\ \text{message chiffré} \\ C \end{array}}$$

## FIG.9

# FIG.10

T1      $TC_2 (E \oplus e(p(u)), S \oplus u)$

T2      $TC_2 (E \oplus e(p(u)), S \oplus u)$

T3      $TC_2 (E \oplus e(p(u)), S \oplus u)$

T4      $TC_2 (E \oplus e(p(u)), S \oplus u)$

T5

$(M,K)$

Tirage de la valeur aléatoire
u
Calcul de $e(p(u))$

CALCUL DE
$TC_1 = E,S \oplus u$
$TC_3 = E \oplus e(p(u)),S$

L0,R0   SEQA[$TC_1$,$TC_3$]

G1

T1($TC_1$)
T2($TC_3$)
T3($TC_1$)

L3,R3

T4($TC_0$)
⋮
T13($TC_0$)

L13,R13   SEQA[$TC_1$,$TC_3$]

G4

T14($TC_1$)
T15($TC_3$)
T16($TC_1$)

L16,R16

Calcul du
message chiffré
C

## FIG.11

M
f
IP
e
LO    RO    K
q
KEY PERM
r

h
EXP PERM
l
XOR — K1
b              SHIFT
SBOX [Tc1]         p
a⊕u            COMP PERM
P PERM         m
c⊕p(u)    $TC_1 = E,S \oplus u$
XOR
T1

$R1 \oplus p(u)$   g⊕p(u)
L1    h⊕p(u)
EXP PERM       r
l⊕e(p(u))         SHIFT
XOR — K2        p
b⊕e(p(u))       COMP PERM
SBOX [Tc3]      m
a    $TC_3 = (E \oplus e(p(u)),S)$
P PERM
c
XOR
T2

R2    g
$L2 \oplus p(u)$   h       r
EXP PERM        SHIFT
l            p
XOR — K3       COMP PERM
b            m
SBOX [Tc1]   $TC_1 = E,S \oplus u$
a⊕u
P PERM
c⊕u
XOR
T3

R3    g       r
L3    h      SHIFT
EXP PERM      p
l        COMP PERM
XOR — K4       m
b     $TC_0 = E,S$
SBOX [Tc0]
a
P PERM
c
XOR
T4

R4    g       r
L4

G1,SEQA

# FIG.12

25

$$(M,K)$$

Tirage de la valeur aléatoire u
Calcul de la dérivée $e(p(u))$

CALCUL DE
$$TC_1 = E,S \oplus u$$
$$TC_3 = E \oplus e(p(u)),S$$

L0,R0      $SEQA[TC_1, TC_3, TC_0, Cp(u)]$

G1      
T1 $(TC_1)$
T2 $(TC_3)$
T3 $(TC_0, CP)$

L3,R3

T4 $(TC_0)$
⋮
T13 $(TC_0)$

L13,R13      $SEQA[TC_1, TC_3, TC_0, Cp(u)]$

G4      
T14 $(TC_1)$
T15 $(TC_3)$
T16 $(TC_0, CP)$

L16,R16

Calcul du
message chiffré
C

# FIG.13